# EUROPEAN PATENT SPECIFICATION

(11) **EP 2 826 888 B1**
(45) Date of publication and mention of the grant of the patent: **12.07.2017**
(21) Application number: 13761351.9
(22) Date of filing: 12.03.2013
(51) Int. Cl.: C25B 1/26, C25B 11/02, C02F 1/461, C25B 9/06

(54) **DIAPHRAGMLESS ELECTROLYZER**
MEMBRANLOSER ELEKTROLYSATOR
APPAREIL D'ÉLECTROLYSE SANS DIAPHRAGME

(30) Priority: 12.03.2012 KR 20120024844
(43) Date of publication of application: 21.01.2015
(73) Proprietor: KYOSUN CO,. LTD., Yeonsu-gu Incheon (KR)
(72) Inventor: KIM, Tae Hyoung, Incheon 404-785 (KR); KIM, Yu Ee, Incheon 400-751 (KR)
(74) Representative: Sloboshanin, Sergej
(86) International application number: PCT/KR2013/001983
(87) International publication number: WO 2013/137624

(56) References cited:
- JP-A- 2007 313 489
- KR-A- 20110 008 922
- KR-A- 20120 019 317
- KR-B1- 101 027 538
- KR-Y1- 200 251 390
- US-A- 3 856 642
- US-A1- 2010 288 626
- US-B2- 7 144 493

## Description

### Technical Field

The present invention relates to a diaphragmless electrolyzer to produce subacid hypochlorous acid water by electrolyzing diluted hydrochloric acid, and more particularly to a diaphragmless electrolyzer in which the electrode plates could be cooled by dilution water to produce subacid hypochlorous acid water more effectively.

### Background Art

Usually, subacid hypochlorous acid water is made by electrolyzing diluted hydrochloric acid (2∼6%) through a diaphragmless electrolyzer to produce chlorine gas and diluting the produced chlorine gas with water. The well-known electrolytic device used to produce subacid hypochlorous acid water comprises a pair of electrodes and a rectangular housing forming an electrolysis chamber. The related arts are disclosed in Korean patent No. 0592331 (issued on June 15, 2006) and Korean patent No. 0634889 (issued on October 10, 2006).

These electrolytic devices include an inlet on the lower part of the housing into which hydrochloric acid is introduced and an outlet on the upper part of the housing from which products including chlorine gas produced by electrolyzing the hydrochloric acid are exhausted. The products by electrolysis (such as chlorine gas, hydrogen gas and hydrochloric acid gas) are diluted by water subsequently, then the chlorine gas is dissolved to produce subacid hypochlorous acid water.

Meanwhile, as 2∼6% diluted hydrochloric acid is used to produce subacid hypochlorous acid water, it is necessary to apply high current on the electrodes in order to electrolyze the hydrochloric acid effectively. But applying the high current on the electrodes may result in overheating of the electrodes and shortened lifespan of the electrodes. Moreover, as the temperature of the produced chlorine gas is high, the housing of the electrolytic device will be heated by the produced chlorine gas as well as the heated electrodes, which may cause damage of the electrolytic device and accident of chlorine gas leakage.

### Disclosure

### Technical Problem

The present invention is proposed to solve the above mentioned problems, and the object of the invention is to provide a new diaphragmless electrolyzer to produce subacid hypochlorous acid water effectively without damaging the components of the device such as the electrodes by cooling the electrodes with dilution water.

### Technical Solution

According to an aspect of the present invention, there is provided a diaphragmless electrolyzer to produce subacid hypochlorous acid water, wherein the device comprises a housing 22 having a sealed inner space, a pair of electrode plates 10, 10' disposed in the housing 22 to be opposite to each other, and a partition member 12 disposed between the electrode plates 10, 10' to partition the inner space of the housing 22 into an electrolysis chamber 16 and a dilution chamber 24,
the electrolysis chamber 16 having a hydrochloric acid inlet 18 on one side of it into which hydrochloric acid is introduced,
the partition member 12 having a passage 20 which introduces the chlorine gas produced by electrolyzing the hydrochloric acid in the electrolysis chamber 16 into the dilution chamber 24,
the dilution chamber 24 having a dilution water inlet 26 on one side of it to supply dilution water in order to dissolve and dilute the chlorine gas, and a hypochlorous acid water outlet 28 on the other side of it to exhaust the hypochlorous acid water produced by dissolving the chlorine gas with the dilution water,
the electrode plates 10, 10' further including extending portions 10a, 10a' extending toward the dilution chamber 24 so that the dilution water 24 introduced into the dilution chamber 24 could contact with the extending portions 10a, 10a' of the electrode plates 10, 10' and cool the electrode plates 10, 10'.

According to another aspect of the present invention, there is provided a diaphragmless electrolyzer, wherein the dilution chamber 24 is disposed above the electrolysis chamber 16, and the lower surface of the partition member 12 facing the electrolysis chamber 16 is formed as an inclined plane 20 so that the upper part of the electrolysis chamber 16 becomes narrower as it goes higher, which could introduce the chlorine gas into the passage 20 more smoothly.

According to another aspect of the present invention, there is provided a diaphragmless electrolyzer, wherein the extending portions 10a, 10a' of the electrode plates 10, 10' are spaced apart from the inner surface of the housing 22.

### Description of the Drawings

FIG. 1 is a front section of a first embodiment according to the invention.
FIG. 2 is a side section of the above embodiment.
FIG. 3 is a front section of a second embodiment according to the invention.
FIG. 4 is a front section of a third embodiment according to the invention.
FIG. 5 is a front section of a forth embodiment according to the invention.
FIG. 6 is a front section of a fifth embodiment according to the invention.
FIG. 7 is a side section of the above embodiment.
FIG. 8 is a sectional plan of the above embodiment.
FIG. 9 is a front section of a sixth embodiment which is not according to the invention.
FIG. 10 is a side section of the above embodiment.

### Detailed Description of the Invention

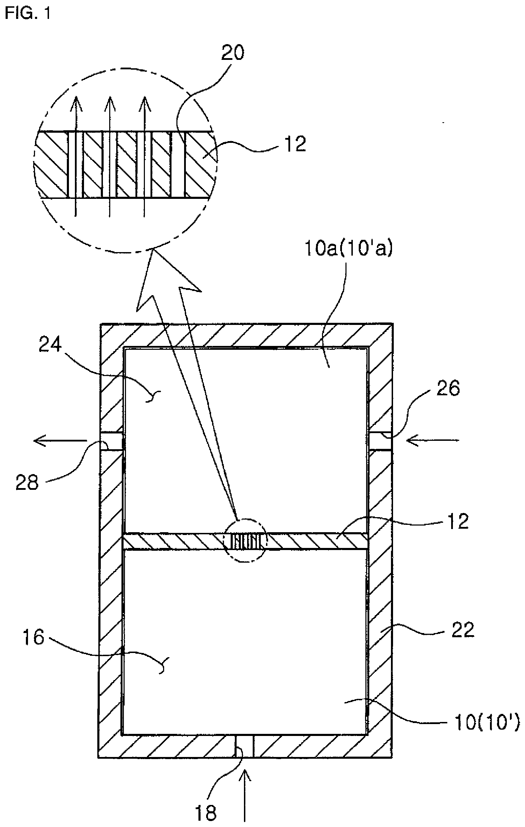

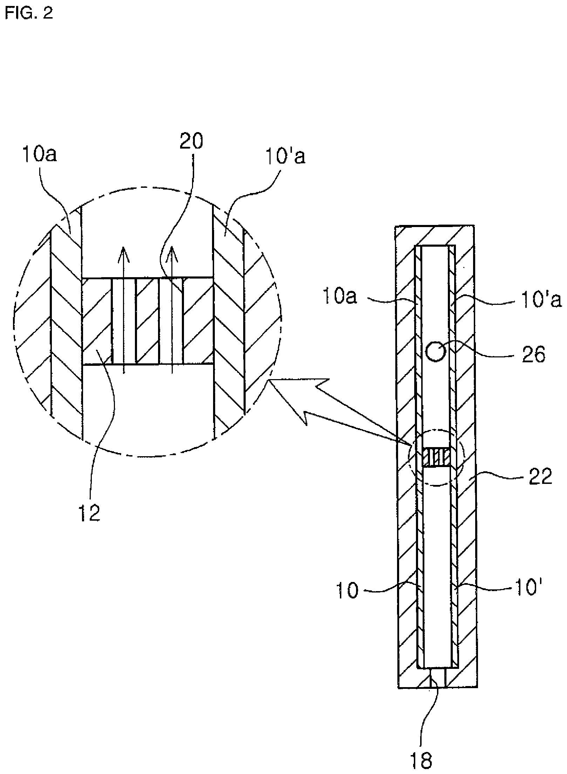

Hereinafter, the preferred embodiments of the invention will be described with reference to the drawings. FIG. 1 and 2 show the first embodiment of the invention. As shown in FIG. 1 and 2, a diaphragmless electrolyzer according to the invention comprises a housing 22 having a sealed inner space, a pair of electrode plates 10, 10' disposed in the housing 22 to be opposite to each other, and a partition member 12 disposed between the electrode plates 10, 10' to partition the inner space of the housing 22 into an electrolysis chamber 16 and a dilution chamber 24.

The housing 22 is formed of an elongated rectangular shape and has a sealed space inside. A hydrochloric acid inlet 18 is formed on the lower part of the housing 22, into which hydrochloric acid to be electrolyzed is introduced. A dilution water inlet 26 is formed on one side of the upper part of the housing 22, and a hypochlorous acid water outlet 28 is formed at the other side of the dilution water inlet 26 of the upper part of the housing 22.

A pair of electrode plates 10, 10' are disposed in the housing 22, and the two electrode plates 10, 10' are separated to each other. Preferably, the electrode plates 10, 10' are attached without gap on the inner surface of the housing 22 neighboring to the planes on which the dilution water inlet 26 and the hypochlorous acid water outlet 28 are formed. The electrode plates 10, 10' are connected to the external power supply by ordinary method.

The partition member 12 is disposed between the electrode plates 10, 10' horizontally to partition the inner space of the housing 22 into an upper space and a lower space. The lower space having the hydrochloric acid inlet 18 forms an electrolysis chamber 16 in which the introduced hydrochloric acid is electrolyzed, and the upper space having the dilution water inlet 26 and the hypochlorous acid water outlet 28 forms a dilution chamber 24 in which the chlorine gas is diluted and dissolved. The partition member 12 has passage 20 comprising a plurality of small pores, which exhausts the electrolyzed products including chlorine gas in the electrolysis chamber 16 into the dilution chamber 24.

Meanwhile, the electrode plates 10, 10' have extending portions 10a, 10a' extending upward to be positioned in the dilution chamber 24.

The invention mentioned above is operated as follows. Hydrochloric acid is injected into the electrolysis chamber 18 through the hydrochloric acid inlet 18, and dilution water is supplied into the dilution chamber 24 through the dilution water inlet 26. The dilution water may be filtered by a proper filter or some minerals may be added to before it is introduced into the dilution water inlet 26. Then the hydrochloric acid introduced in the electrolysis chamber 16 is electrolyzed to produce materials including chlorine gas, hydrogen gas and non-electrolyzed hydrochloric acid.

The electrolyzed products in the electrolysis chamber 16 are exhausted to the dilution chamber 24 through the passage 20 on the partition member 12. The exhausted electrolyzed products in the dilution chamber 24 are diluted with the dilution water, then the chlorine gas is dissolved with the dilution water to produce subacid hypochlorous acid water. The produced hypochlorous acid water flows out of the dilution chamber 24 through the hypochlorous acid water outlet 28.

Meanwhile, as the extending portions 10a, 10a' of the electrode plates 10, 10' are positioned in the dilution chamber 24, the extending portions 10a, 10a' of the electrode plates 10, 10' contact with the dilution water. Therefore, the electrode plates 10, 10' can be cooled by the dilution water, so damage of the electrode plates 10a, 10' owing to heat can be prevented. Other parts such as the housing 22 other than the electrode plates 10a, 10a' would also acquire cooling effect, so the total electrolytic device is protected from damage.

Meanwhile, though the chlorine gas is dissolved by the dilution water to produce hypochlorous acid water, some of the chlorine gas is reproduced into hydrochloric acid as shown in the below formula, so pH of the produced hypochlorous acid water is lowered.

H₂O + Cl₂ → HOCI + HCl

But hypochlorous acid water shows the strongest sterilizing power in weak acid level of pH 5∼6.5. Therefore, in order to produce weak acid level hypochlorous acid water, pH of hypochlorous acid water should be raised. But, if the supply amount of dilution water is increased to raise pH of hypochlorous acid water, then it results in the problem that the concentration of the hypochlorous acid in the hypochlorous acid water becomes lowered.

Meanwhile, according to the present invention, current is applied on the extending portions 10a, 10a' of the electrode plates 10, 10'. Therefore, if a part of the chlorine gas introduced to the dilution chamber 24 is conversed to hydrochloric acid, this hydrochloric acid is electrolyzed in the dilution chamber 24 to produce chlorine gas, and this chlorine gas is dissolved by dilution water to produce hypochlorous acid. Accordingly, the concentration of hypochlorous acid of the dilution water is increased as hydrochloric acid is electrolyzed in the dilution chamber 24, so pH of the hypochlorous acid is increased to produce subacid hypochlorous acid with pH 5∼6.5.

Other embodiments of the invention will be described. The description for the same parts as those of the first embodiment will be omitted.

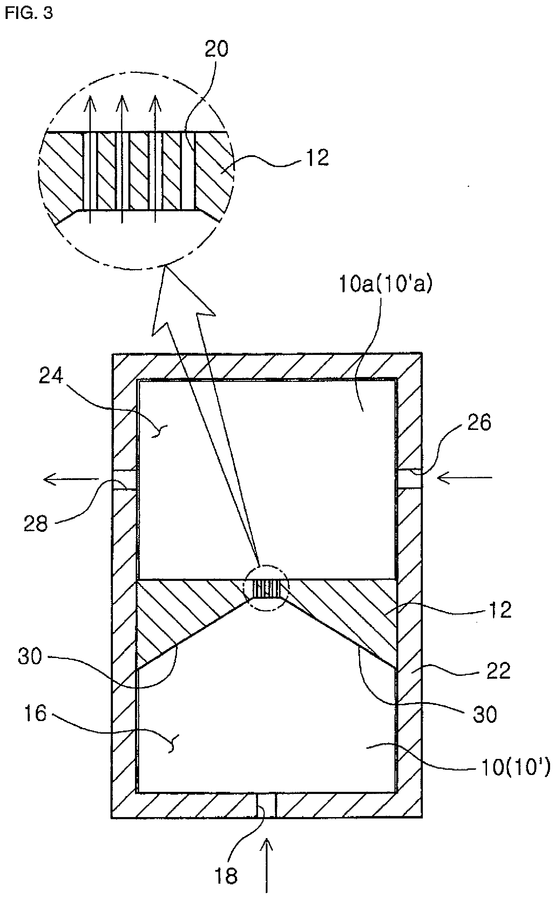

FIG. 3 shows the second embodiment according to the invention, in which the passage 20 is positioned at the central part of the partition member 12 and the lower surface of the partition member 12 is formed of the inclined plane 30 in which both ends of it is gradually lowered. As a result, the upper part of the electrolysis chamber 16 is shaped of a conical hat to be narrowed as it goes higher. This conical inclined plane 30 of the partition member 12 will guide the electrolyzed products including chlorine gas in the electrolysis chamber 16 to flow smoothly through the passage 20 into the dilution chamber 24.

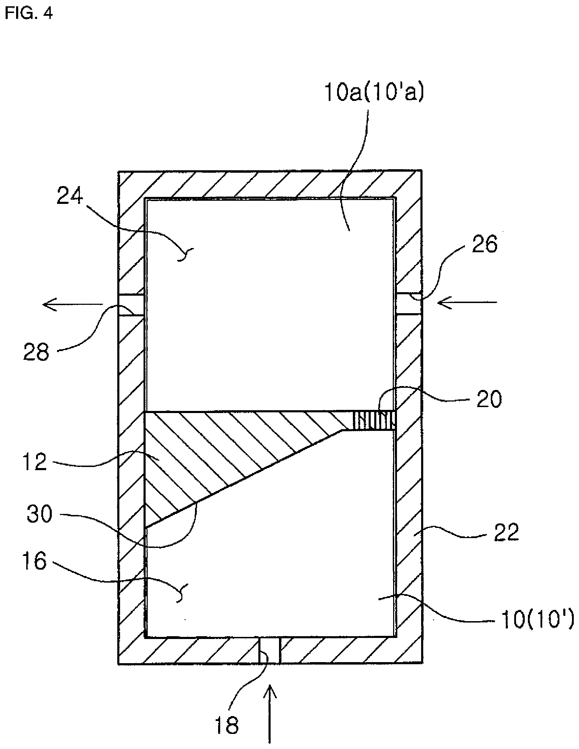

FIG. 4 shows the third embodiment according to the invention, in which the passage 20 is formed at one side of the partition member 12, and an inclined plane 30 is formed at the lower surface of the partition member 12 to introduce the electrolyzed products into the passage 20.

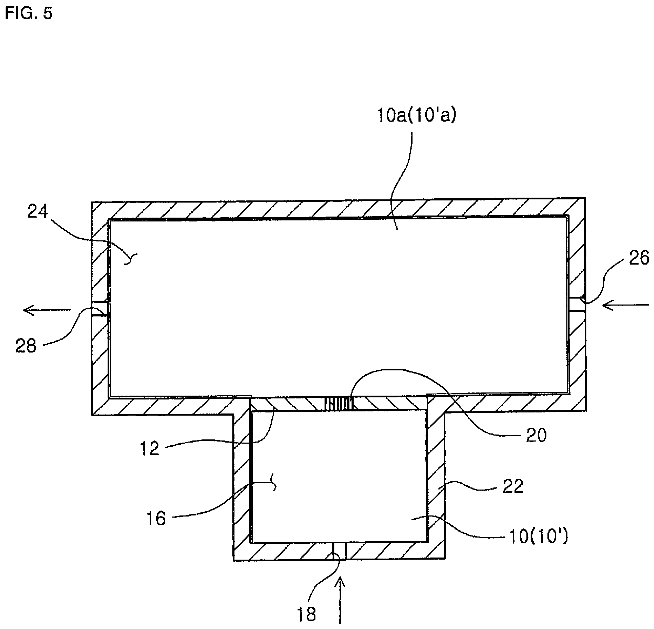

FIG. 5 shows the fourth embodiment according to the invention, in which the width of the dilution chamber 24 is wider than that of the electrolysis chamber 16, and the width of extending portions 10a, 10a' of the electrode plates 10, 10' are also wider than those of the electrode plates 10, 10'. As a result, the contacting area between the extending portions 10a, 10a' of the electrode plates 10, 10' and the dilution water is increased, so the cooling effect is enhanced.

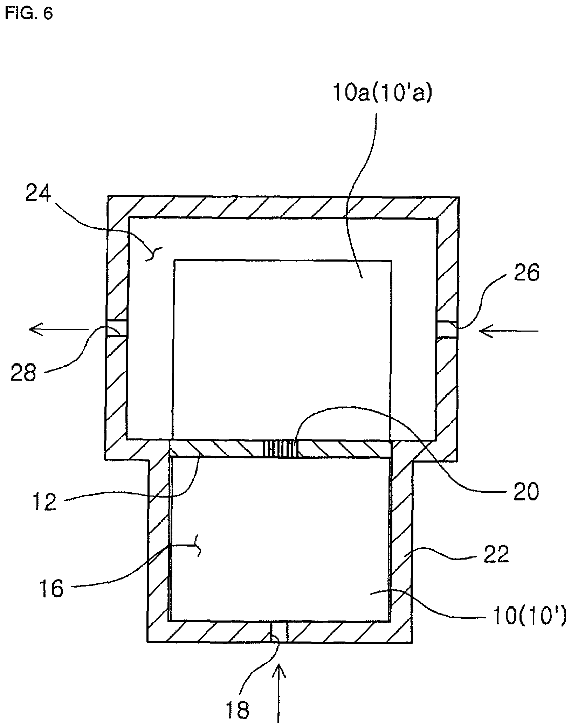

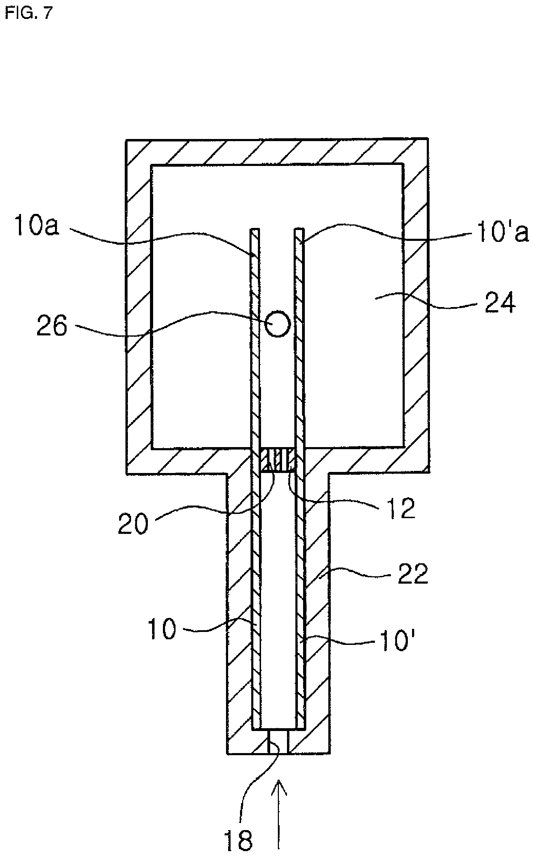

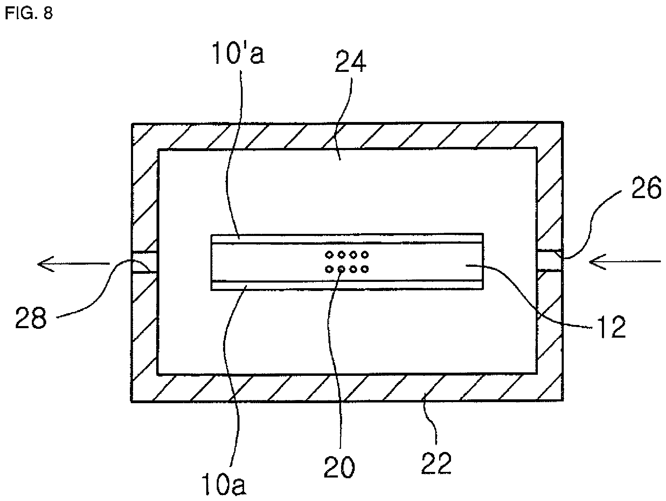

FIG. 6 to 8 show the fifth embodiment according to the invention, in which the upper part of the housing 22 forming the dilution chamber 24 is larger than the extending portions 10a. 10a' of the electrode plates 10, 10' in every direction horizontally as well as upwardly. As a result, the extending portions 10a, 10a' of the electrode plates 10, 10' are spaced apart from the inner surface of the housing 22. In this case, both the front and rear surfaces of the extending portions 10a, 10a' of the electrode plates 10, 10' are exposed on dilution water, so the cooling efficiency becomes higher.

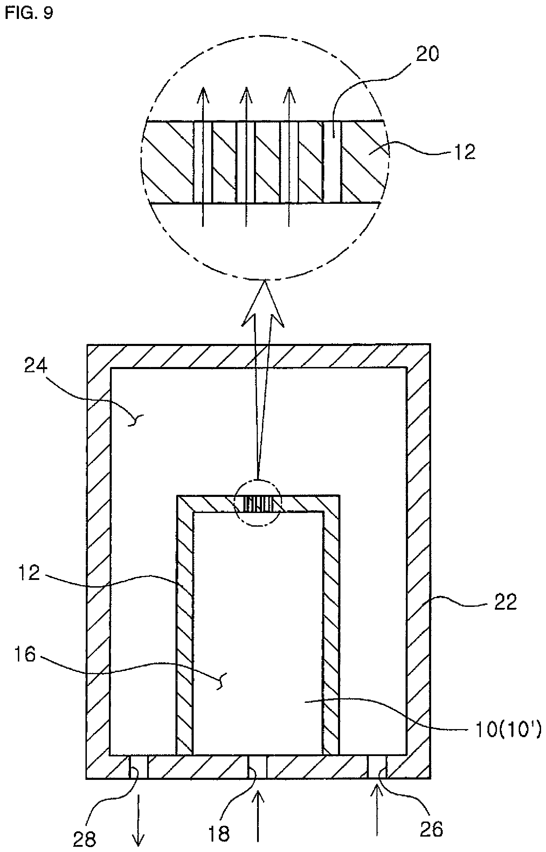

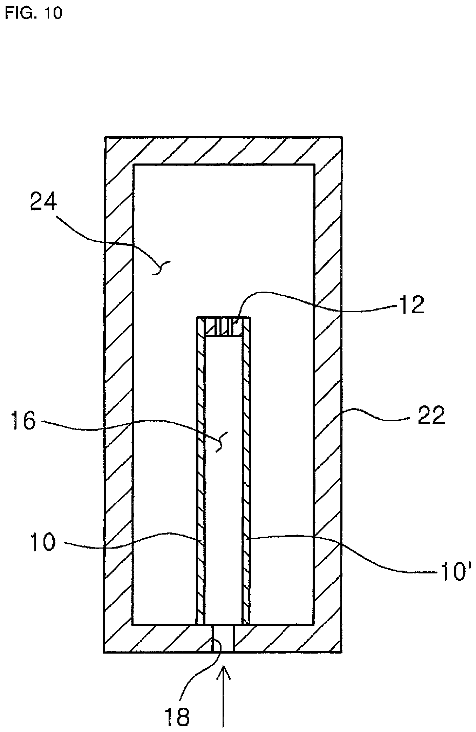

FIG. 9 and 10 show an diaphragmless electrolyzer, in which the width of the housing 22 is wider than that of the electrode plates 10, 10', and the electrode plates 10, 10' are spaced apart from the front and rear inner surfaces of the housing 22. And the partition member 12 is formed of rectangular frame and disposed along the periphery of the electrode plates 10, 10'. As a result, the electrolysis chamber 16 is formed inside the partition member 12 and the electrode plates 10, 10'. And a dilution water inlet 26 and a hypochlorous acid water outlet 28 are formed at the lower end of the housing 22. This embodiment is advantageous in that the electrode plates 10, 10' forming the electrolysis chamber 16 are exposed on the dilution chamber 24, so the cooling effect is higher.

## Claims

1. Diaphragmless electrolyzer to produce subacid hypochlorous acid water, wherein the device comprises a housing (22) having a sealed inner space, a pair of electrode plates (10, 10') disposed in the housing (22) to be opposite to each other, and a partition member (12) disposed between the electrode plates (10, 10') to partition the inner space of the housing (22) into an electrolysis chamber (16) and a dilution chamber (24),
the electrolysis chamber (16) having a hydrochloric acid inlet (18) on one side of it into which hydrochloric acid is introduced,
the partition member (12) having a passage (20) which introduces the chlorine gas produced by electrolyzing the hydrochloric acid in the electrolysis chamber (16) into the dilution chamber (24),
the dilution chamber (24) having a dilution water inlet (26) on one side of it to supply dilution water in order to dissolve and dilute the chlorine gas, and a hypochlorous acid water outlet (28) on the other side of it to exhaust the hypochlorous acid water produced by dissolving the chlorine gas with the dilution water,
the electrode plates (10, 10') further including extending portions (10a, 10a') extending toward the dilution chamber (24) so that the dilution water (24) introduced into the dilution chamber (24) could contact with the extending portions (10a, 10a') of the electrode plates (10, 10') and cool the electrode plates (10, 10').

2. Diaphragmless electrolyzer according to claim 1, wherein the dilution chamber (24) is disposed above the electrolysis chamber (16), and the lower surface of the partition member (12) facing the electrolysis chamber (16) is formed as an inclined plane (20) so that the upper part of the electrolysis chamber (16) becomes narrower as it goes higher, which could introduce the chlorine gas into the passage (20) more smoothly.

3. Diaphragmless electrolyzer according to claim 1 or 2, wherein the extending portions (10a, 10a') of the electrode plates (10, 10') are spaced apart from the inner surface of the housing (22).

## Patentansprüche

1. Diaphragmaloser Elektrolyseur zum Herstellen von schwach saurem hypochlorigem saurem Wasser, wobei die Vorrichtung ein Gehäuse (22) aufweist, das einen abgedichteten Innenraum, ein Paar von Elektrodenplatten (10, 10'), die in dem Gehäuse (22) gegenüber voneinander angeordnet sind, und ein Trennelement (12) aufweist, das zwischen den Elektrodenplatten (10, 10') angeordnet ist, um den Innenraum des Gehäuses (22) in eine Elektrolysekammer (16) und eine Dilutionskammer (24) zu unterteilen,
wobei die Elektrolysekammer (16) an ihrer einen Seite einen Chlorwasserstoffsäureeinlass (18) aufweist, in den Chlorwasserstoffsäure eingeführt wird,
wobei das Trennelement (12) einen Durchgang (20) aufweist, durch den das mittels Elektrolyse der Chlorwasserstoffsäure in der Elektrolysekammer (16) produzierte Chlorgas in die Dilutionskammer (24) eingeführt wird,
wobei die Dilutionskammer (24) auf ihrer einen Seite einen Dilutionswassereinlass (26) zum Zuführen von Dilutionswasser hat, um das Chlorgas aufzulösen und zu verdünnen, und auf ihrer anderen Seite einen Auslass (28) für hypochloriges saures Wasser hat, um das durch Lösen des Chlorgases in dem Dilutionswasser produzierte hypochlorige saure Wasser abzugeben,
wobei die Elektrodenplatten (10, 10') ferner Erstreckungsabschnitte (10a, 10a') aufweisen, die sich zu der Dilutionskammer (24) erstrecken, so dass das in die Dilutionskammer (24) eingeführte Dilutionswasser (24) die Erstreckungsabschnitte (10a, 10a') der Elektrodenplatten (10, 10') kontaktieren kann und die Elektrodenplatten (10, 10') kühlt.

2. Diaphragmaloser Elektrolyseur nach Anspruch 1, wobei die Dilutionskammer (24) über der Elektrolysekammer (16) angeordnet ist, und die der Elektrolysekammer (16) zugewandte untere Oberfläche des Trennelements (12) als eine geneigte Ebene (30) ausgebildet ist, so dass der obere Teil der Elektrolysekammer (16) enger wird, wenn er höher geht, wodurch das Chlorgas gleichmäßiger in den Durchgang (20) eingeführt werden kann.

3. Diaphragmaloser Elektrolyseur nach Anspruch 1 oder 2, wobei die Erstreckungsabschnitte (10a, 10a') der Elektrodenplatten (10, 10') von der Innenfläche des Gehäuses (22) beabstandet sind.

## Revendications

1. Dispositif d'électrolyse sans diaphragme destiné à produire de l'eau peu acide d'acide hypochloreux, dans lequel le dispositif comprend une enveloppe (22) présentant un espace intérieur fermé de manière étanche, une paire de plaques d'électrode (10, 10') agencées dans ladite enveloppe (22) de manière à se faire face l'une l'autre, et un élément de partition (12) agencé entre les plaques d'électrode (10, 10') afin de partitionner l'espace intérieur de l'enveloppe (22) en une chambre d'électrolyse (16) et une chambre de dilution (24),
la chambre d'électrolyse (16) présentant sur l'un de ses côtés une entrée d'acide chlorhydrique (18) dans laquelle est introduit de l'acide chlorhydrique,
l'élément de partition (12) présentant un passage (20) qui introduit dans la chambre de dilution (24) le gaz chlore produit par électrolyse de l'acide chlorhydrique dans la chambre d'électrolyse (16),
la chambre de dilution (24) présentant sur l'un de ses côtés une entrée d'eau de dilution (26) destinée à fournir de l'eau de dilution afin de dissoudre et diluer le gaz chlore, et une sortie d'eau d'acide hypochloreux (28) sur son autre côté pour évacuer l'eau d'acide hypochloreux produit par dissolution du gaz chlore grâce à l'eau de dilution,
les plaques d'électrode (10, 10') comprenant en outre des parties d'extension (10a, 10a') s'étendant en direction de la chambre de dilution (24) de sorte que l'eau de dilution (24) introduite dans la chambre de dilution (24) peut venir en contact avec les parties d'extension (10a, 10a') des plaques d'électrode (10, 10') et refroidir les plaques d'électrode (10, 10').

2. Dispositif d'électrolyse sans diaphragme selon la revendication 1, dans lequel la chambre de dilution (24) est agencée au-dessus de la chambre d'électrolyse (16), et la surface inférieure de l'élément de partition (12) faisant face à la chambre d'électrolyse (16) est formée en tant que plan incliné (30) de sorte que la partie supérieure de la chambre d'électrolyse (16) devient plus étroite à mesure qu'elle est plus haute, ce qui permet d'introduire plus régulièrement le gaz chlore dans le passage (20).

3. Dispositif d'électrolyse sans diaphragme selon la revendication 1 ou 2, dans lequel les parties d'extension (10a, 10a') des plaques d'électrode (10, 10') sont espacées par rapport à la surface intérieure de l'enveloppe (22).
